# EUROPÄISCHE PATENTSCHRIFT

(11) **EP 0 748 268 B1**
(45) Veröffentlichungstag und Bekanntmachung des Hinweises auf die Patenterteilung: **05.11.1997**
(21) Anmeldenummer: 95908185.2
(22) Anmeldetag: 03.02.1995
(51) Int. Cl.: B23K 33/00, B23K 26/00

(54) **VERFAHREN ZUM VORBEREITEN DER FÜGEBEREICHE BESCHICHTETER WERKSTÜCKE ZUM SCHWEISSEN MIT LASERSTRAHLUNG UND ÜBERLAPPSTOSS ZUM SCHWEISSEN BESCHICHTETER WERKSTÜCKE**
PROCESS FOR PREPARING THE SEAM REGIONS OF COATED WORKPIECES FOR LASER BEAM WELDING AND LAP JOINT FOR WELDING COATED WORKPIECES
PROCEDE DE PREPARATION DES ZONES DE JOINTURE DE PIECES REVETUES POUR SOUDAGE AU LASER ET ASSEMBLAGE A RECOUVREMENT POUR SOUDAGE DE PIECES REVETUES

(30) Priorität: 04.03.1994 DE 4407190
(43) Veröffentlichungstag der Anmeldung: 18.12.1996
(73) Patentinhaber: Thyssen Laser-Technik GmbH, 52074 Aachen (DE)
(72) Erfinder: ABRAM, Lutz, D-41189 Mönchengladbach (DE); FISCHER, Rainer, D-52146 Würselen (DE); KLEIN, Rolf, D-52074 Aachen (DE); POPRAWE, Reinhart, D-52072 Aachen (DE); SPIX, Gerhard, D-52064 Aachen (DE)
(74) Vertreter: Eichler, Peter, Dipl.-Ing.
(86) Internationale Anmeldenummer: DE9500142
(87) Internationale Veröffentlichungsnummer: WO9523670

(56) Entgegenhaltungen:
- WO-A-90/11161
- US-A- 4 642 446

## Beschreibung

Die Erfindung bezieht sich auf ein Verfahren zum Vorbereiten der Fügebereiche beschichteter Werkstücke, insbesondere verzinkter Bleche, zum Schweißen mit Laserstrahlung, bei dem im Bereich der Schweißnaht rändelungsartig angeordnete, Abstand zwischen benachbarten Werkstückflächen schaffende Oberflächenstrukturen hergestellt werden.

Korrosionsgefährdete Bauteile aus Stahlblech werden z.B. im Automobilbau zunehmend mit einer einseitigen Beschichtung oder mit beidseitigen Beschichtungen z.B. aus Zink versehen. Um derartig beschichtete Blechbauteile entweder als Flachbleche oder als dreidimensionale Bauteile zu verschweißen, kommt das Laserstrahlschweißen zunehmend zur Anwendung. Dabei ist die vergleichsweise niedrige Verdampfungstemperatur des Zinks der Oberflächenbeschichtung problematisch. Infolge von Zinkdampf können in der Schweißnaht Löcher auftreten, die die Festigkeit der Fügeverbindung herabsetzen. Insbesondere beim Fügen im Überlappstoß muß infolge der lokalen Laserstrahlwirkung bei schmalen Schweißnähten und damit verbundenen hohen Abkühlraten damit gerechnet werden, daß die durch den Zinkdampf entstehenden Löcher bzw. Poren bei der gegebenen Schmelzbaddynamik nicht mehr geschlossen werden können. Vermeiden lassen sich diese Schweißfehler nur, wenn dem Zinkdampf bzw. dem Beschichtungsdampf die Möglichkeit geboten wird, aus dem Schweißbahnbereich zu entweichen.

Aus der DE 39 09 471 C2 ist ein verfahren mit den eingangs genannten Verfahrensschritten bekannt. Von zwei flach aneinanderliegenden Blechen wird mindestens eines mit einer Rändelung versehen, die als Querrändelung ausgebildet ist, so daß entstehender Beschichtungsdampf seitlich aus dem Bereich der Schweißnaht entweichen kann. Es besteht also die Möglichkeit des Druckausgleichs über einen Bereich, der größer als der Wechselwirkungsbereich der Laserstrahlung mit dem Werkstoff ist. Die Rändelung wird mittels spanabhebender, Kaltpreß- oder Kaltwalz- oder Prägeverfahren hergestellt. Derartige spanabhebende verfahren oder Umformverfahren haben jedoch erhebliche Nachteile. Insbesondere sind sie technologisch nur dann sinnvoll einzusetzen, wenn die benachbarten Werkstückflächen im wesentlichen planparallel sind. Nur dann lassen sich massenfertigungsgerechte verfahren einsetzen, beispielsweise die bekannten Rändelungsverfahren. Bei dreidimensionalen Werkstückflächen wird die technische Umsetzung der bekannten Verfahren jedoch aufwendig bzw. werkstückabhängig und dadurch wenig flexibel. Jede mechanische Bearbeitung ist außerdem stark toleranzabhängig. Werkzeugtoleranzen und Werkstücktoleranzen können insbesondere bei hohen Produktionsgeschwindigkeiten dazu führen, daß keine Rändelung mit den erforderlichen Eigenschaften hergestellt wird, wodurch die Erzielung enger Fertigungstoleranzen erschwert wird. Das gilt insbesondere dann, wenn durch die mechanische Bearbeitung Verformungen auftreten, was insbesondere bei den Kaltpreß-, Kaltwalz- und Prägeverfahren der Fall ist. Letztlich kann sich für die Verbindungsfestigkeit auch störend auswirken, daß alle mechanischen verfahren vergleichsweise starken Einfluß auf das Gefüge des Werkstoffs der zu fügenden Werkstücke nehmen.

Demgegenüber liegt der Erfindung die Aufgabe zugrunde, ein Verfahren mit den eingangs genannten Verfahrensschritten so zu verbessern, daß die durch die mechanischen Verfahren bedingten Nachteile von Toleranzeinflüssen, ungewollten Werkstückverformungen und Gefügebeeinflussungen vermieden werden, wobei das Verfahren insbesondere auch für dreidimensional ausgebildete benachbarte Werkstückflächen massenfertigungsgerecht einzusetzen sein soll.

Diese Aufgabe wird dadurch gelöst, daß die rändelungsartig angeordneten Oberflächenstrukturen mit getakteter Hochenergiestrahlung hergestellt werden.

Infolge des Einsatzes getakteter Hochenergiestrahlung werden die rändelungsartig angeordneten Oberflächenstrukturen berührungslos hergestellt. Als Hochenergiestrahlung kommt Ionenstrahlung, Elektronenstrahlung und vorzugsweise Laserstrahlung infrage. Toleranzen mechanischer Rändelwerkzeuge und ihrer Relativlage zum Werkstück sind bei diesem Verfahren also kein Problem. Es kann mit hohen Relativgeschwindigkeiten strukturiert werden. Unerwünschte Verformungen der Werkstücke und eine Einflußnahme auf deren Werkstoffgefüge finden nicht statt. Auf dreidimensionale Ausbildungen der zu bearbeitenden Werkstückflächen kann grundsätzlich mit einfachen Mitteln Rücksicht genommen werden. Die Taktung der Strahlung gestattet es, Oberflächenstrukturen in ihrer Formgestaltung und in ihrer rändelungsartigen Anordnung den jeweiligen Bedürfnissen umgehend anzupassen, insbesondere auch während des Bahnverlaufs bei der Bearbeitung einer einzigen Werkstückfläche. Das Verfahren ist infolgedessen sehr variabel und überhaupt nicht abhängig von irgendwelchen baulichen Besonderheiten eines Werkstücks. Der Werkstoff des Werkstücks und der Beschichtung und deren Dicke können problemlos berücksichtigt werden.

Das Verfahren ist vorteilhaft dahingehend durchzuführen, daß jede der rändelungsartig angeordneten Oberflächenstrukturen mit einem einzigen Strahlfleck oder mit mehreren Strahlflecken getakteter Laserstrahlung hergestellt wird. Eine strahlfleckenweise Oberflächenstrukturierung ermöglicht es, mit Laserstrahlung beliebiger Wellenlänge und ausreichender Laserleistung Oberflächenstrukturen herzustellen, die strahlfleckähnlich sein können. Das verringert den technischen Aufwand für das Verfahren. Inbesondere dabei wird so getaktet, daß mit jedem Takt ein Strahlfleck erzeugt wird. Der Laser wird also für einen Strahlfleck einmal ein- und einmal ausgeschaltet und dabei taktweise kontinuierlich oder gepulst betrieben.

Wenn das Verfahren so durchgeführt wird, daß die rändelungsartig angeordneten Oberflächenstrukturen als vom Beschichtungswerkstoff freie Ausformungen des Grundwerkstoffs des Werkstücks hergestellt werden, ist das Werkstück im Bereich der Oberflächenstruktur bereits optimal für das Verschweißen vorbereitet. Darüber hinaus kann die Oberflächenstruktur sehr präzise so ausgebildet werden, daß die freie Ausformung des Grundwerkstoffs des Werkstücks so klein wie möglich gehalten werden kann. Insbesondere bei dickeren Beschichtungen ist der beim Schweißen zum Verdampfen von Beschichtungswerkstoff erforderliche Querschnitt des Mikrokanals allein aufgrund des beim Oberflächenstrukturieren entfernten Beschichtungswerkstoffs vergleichsweise groß. Die infolgedessen geringe Tiefe der Ausformung des Grundwerkstoffs kann sich im Sinne einer gesteigerten Verbindungsfestigkeit der Werkstücke auswirken.

Es ist vorteilhaft, daß Verfahren so durchzuführen, daß die rändelungsartig angeordneten Oberflächenstrukturen als durch Verdampfen von Grundwerkstoff des Werkstücks ausgebildete Vertiefungen hergestellt werden. Durch den Verdampfungsvorgang wird ein Mikrokanal mit steilen Flanken gebildet, so daß der Mikrokanal schmal und/oder kurz sein kann und trotzdem in der Lage ist, entweichenden Beschichtungsdampf aufzunehmen oder weiterzuleiten.

Um ein solches Verdampfen von Grundwerkstoff des Werkstoffs zu erreichen, ist es vorteilhaft, das Verfahren so durchzuführen, daß eine Scanneroptik eingesetzt wird, die auf dem Werkstück mit dem Laserstrahl eine vorbestimmte Bahn abfährt, auf der abschnittsweise jeweils eine in sich zusammenhängende Oberflächenstruktur mit einer vielzahl von Laserpulsen erzeugt wird. Mit Hilfe der Scanneroptik kann die Projektionsfläche der Oberflächenstruktur in Strahlrichtung sehr gut angepaßt werden, da die einzelnen Pulse auf der Werkstückfläche gesteuert positioniert werden können. Auch die Relativlage der Oberflächenstrukturen auf einer Bahn kann durch Steuerung der Scanneroptik sehr variabel beeinflußt werden, was bei komplizierter dreidimensionaler Ausbildung der zu bearbeitenden Werkstückfläche von Vorteil ist.

Das Verfahren kann auch so durchgeführt werden, daß die rändelungsartig angeordneten Oberflächenstrukturen als durch Aufschmelzen von Grundwerkstoff des Werkstücks ausgebildete, über die Werkstückaußenfläche vorstehende Erhebungen hergestellt werden. Die Erhebungen, die beim Aufschmelzen des Grundwerkstoffs erzeugt werden, schaffen infolge ihres Überstands über die Werkstückaußenfläche einen entsprechenden Abstand zwischen den benachbarten Werkstückflächen, in welche der beim Laserstrahlschweißen entstehende Materialdampf der Beschichtung expandieren kann.

Um ein Aufschmelzen von Grundwerkstoff des Werkstücks vorteilhaft bewerkstelligen zu können, wird das Verfahren so durchgeführt, daß eine Zylinderoptik eingesetzt wird, die die Laserstrahlung strichartig fokussiert, wobei pro Lasertakt eine Oberflächenstruktur erzeugt wird. Infolgedessen läßt sich das Verfahren mit den einfachen Mitteln einer Zylinderoptik durchführen und hat den Vorteil, hohe Bearbeitungsgeschwindigkeiten zu ermöglichen, wenn mit einer hohen Taktfrequenz gearbeitet wird.

Um die Oberflächenstruktur in ihrer Erstreckung auf der Werkstückfläche auf einfache Weise beeinflussen zu können, wird das Verfahren so durchgeführt, daß als Zylinderoptik zwei Zylinderlinsen mit zueinander senkrechten Achsen und mit einstellbarem Abstand zueinander und/oder zum Werkstück verwendet werden. Mit der Einstellung des Abstands der beiden Zylinderlinsen läßt sich der Strahlfleck in seiner Breite und in seiner Länge beeinflussen. Durch Änderung des Abstands der werkstückseitigen Zylinderlinse zum Werkstück wird die Fokussierung geändert und damit sowohl die Breite, als auch die Länge des Strahlflecks.

Es ist vorteilhaft, wenn das Verfahren so durchgeführt wird, daß die Scanner- oder Zylinderoptik zur Herstellung von rändelungsartig angeordneten Oberflächenstrukturen mit einer motorisch betriebenen Rotationsachse und/oder mit zumindest im wesentlichen vertikaler Anstellung der Strahlachse der Laserstrahlung in Bezug auf die zu bearbeitende Werkstückaußenfläche eingesetzt wird. Mit Hilfe der motorisch betriebenen Rotationsachse läßt sich erreichen, daß eine strichartig ausgebildete Oberflächenstruktur stets den gewünschten Winkel zur Schweißbahn hat. Mit der zumindest im wesentlichen vertikalen Anstellung der Strahlachse kann erreicht werden, daß der bahnbezogene Abstand der Oberflächenstrukturen untereinander nicht unzulässig groß wird, wenn die zu bearbeitende Werkstückfläche vertikale Abschnitte hat, auf denen die Schweißbahn zumindest im wesentlichen aufsteigend oder abfallend verläuft.

Um hohe Bearbeitungsgeschwindigkeiten zu erreichen, wird das Verfahren so durchgeführt, daß ein Nd:YAG-Laser mit Lichtwellenleiter zur Übertragung der Laserstrahlung vom Laser zu einer Scanner- oder Zylinderoptik verwendet wird. Ein solcher Laser ist gut pulsbar und erreicht zugleich hohe Pulsleistungen, während der Lichtwellenleiter eine robotertaugliche Strahlführung darstellt, die in Verbindung mit dreidimensional gut beweglichen Bearbeitungsoptiken eingesetzt werden können, mit denen die Laserstrahlung bei dreidimensionalen Werkstücken im wesentlichen senkrecht auf die zu bearbeitende Werkstückoberfläche angestellt werden kann.

Die Erfindung bezieht sich auch auf einen Überlappstoß zum Schweißen beschichteter Werkstücke, insbesondere verzinkter Bleche, mittels Laserstrahlung, mit im Bereich der Schweißnaht rändelungsartig angeordneter, Abstand zwischen benachbarten Werkstückflächen schaffenden Oberflächenstrukturen, was aus der DE 39 09 471 C2 bekannt ist.

Die bekannte Rändelung besteht aus Vertiefungen, deren Oberfläche von Beschichtungswerkstoff behaftet ist. Beispielsweise führt ein Prägen zu Vertiefungen, die durch Werkstoffverdrängungen des Grundwerkstoffs mit dem Beschichtungswerkstoff hergestellt sind, wobei letzterer oberhalb des Grundwerkstoffs angeordnet bleibt. Beim Verschweißen wird dieser Beschichtungswerkstoff im Bereich der Schweißnaht verdampft und muß aus dem Nahtbereich entweichen. Außerdem liegt der Grundwerkstoff unterhalb der Beschichtung tiefer, als es für die herzustellende Schweißverbindung wünschenswert ist. Um zu erreichen, daß der Überlappstoß optimal zum Schweißen vorbereitet wird, indem eine Verdampfung des Beschichtungswerkstoffs im Bereich der Oberflächenstrukturen beim Verschweißen vermieden wird, wird der Überlappstoß so ausgebildet, daß die rändelungsartig angeordneten Oberflächenstrukturen vom Beschichtungswerkstoff durch Bestrahlung mit Hochenergiestrahlung freie Ausformungen des Grundwerkstoffs des Werkstücks sind.

Es ist vorteilhaft, den Überlappstoß so auszubilden, daß die rändelungsartig angeordneten Oberflächenstrukturen durch Verdampfen von Grundwerkstoff des Werkstücks ausgebildete Vertiefungen oder durch Aufschmelzen von Grundwerkstoff des Werkstücks ausgebildete, über die Werkstückaußenfläche vorstehende Erhebungen sind. In beiden Fällen werden Mikrokanäle in die Werkstückflächen eingearbeitet, die als Puffervolumen oder Gaskanal für den verdampften Beschichtungswerkstoff dienen können, so daß der entstehende Beschichtungsdampf nicht durch die Schmelze der Schweißnaht entgasen muß. Die Vertiefungen oder Erhebungen sind in die Werkstücke einzubringen, ohne daß letztere verformt werden, weil das Verdampfen und das Aufschmelzen keinen verformenden Einfluß auf neben den Oberflächenstrukturen gelegene Bereiche des Werkstücks nehmen.

Die Erfindung wird anhand von in der Zeichnung dargestellten Ausführungsbeispielen erläutert. Es zeigt:
- Fig.1: einen Querschnitt zweier spezieller Werkstücke im Bereich einer Fügestelle,
- Fig.2: eine Aufsicht auf die Schweißbahn eines Werkstücks nach der Anordnung von Oberflächenstrukturen,
- Fig.3,4: Querschnitte II-II durch Oberflächenstrukturen gemäß Fig.2,
- Fig.5: eine schematische Darstellung einer Scanneroptik zur Herstellung von Oberflächenstrukturen gemäß Fig.2, und
- Fig.6: eine schematische Darstellung einer Zylinderoptik zur Herstellung von Oberflächenstrukturen.

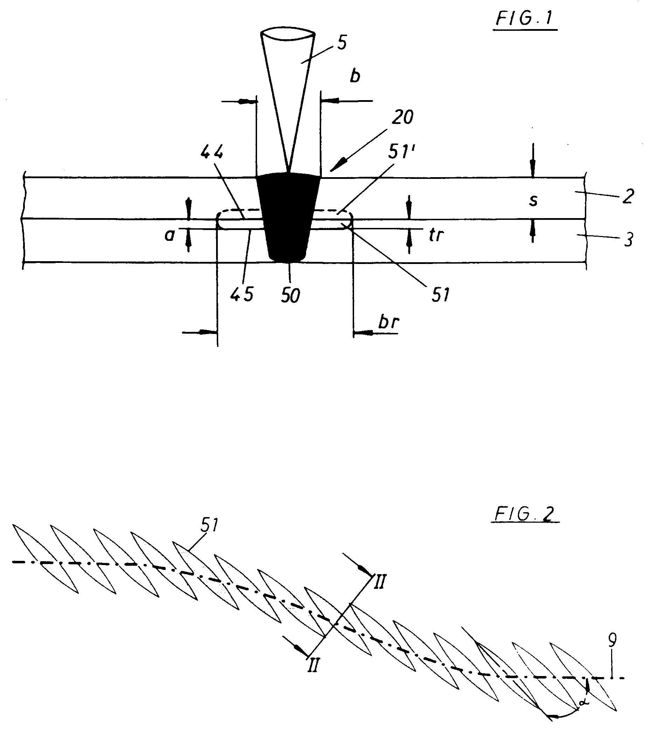

In Fig.1 sind jeweils schematisch zwei Werkstücke 2,3 dargestellt, nämlich die Querschnitte von Blechen. Beide Bleche haben dieselbe Dicke s. Sie liegen abstandslos dicht aneinander. Sie sollen im Fügebereich 20 durch eine Schweißnaht 50 miteinander verbunden werden, die von der Laserstrahlung 5 erzeugt wird und eine effektive Breite b hat. Zum Verschweißen wird der Laserstrahl 5 quer zur relativen Vorschubrichtung der Werkstücke 2,3 bewegt, so daß sich die dargestellte, schwach V-förmige Schweißnaht 50 ausbildet, welche die Werkstücke 2,3 über ihre gesamte Dicke 2s verbindet.

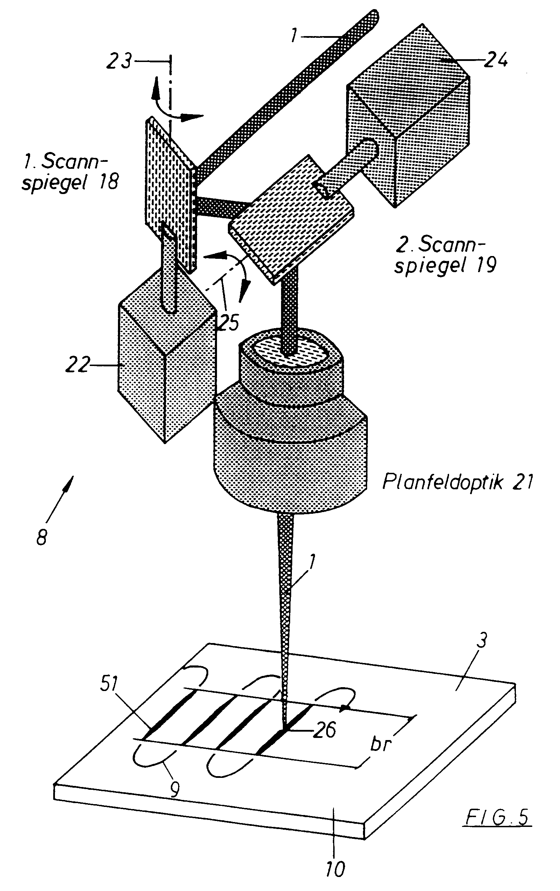

Die Werkstücke 2,3 sind beschichtet und liegen mit ihrer Beschichtung in nicht dargestellter Weise aneinander. Die Fig. 3,4 zeigen schematisch eine auf den Grundwerkstoff 6 aufgebrachte Beschichtung 4. Zum Vorbereiten des Fügebereichs 20 werden in die Werkstücke 2,3 Oberflächenstrukturen 51,51' eingearbeitet, die linien- oder strichartig ausgebildet sind. Von Bedeutung ist, daß die Werkstückflächen 44,45 im Bereich der Oberflächenstrukturen 51,51' Abstand a zueinander haben, und daß die Breite br bzw. Länge einer solchen Struktur 51 größer ist, als die Breite b des Fügebereichs 20. Infolgedessen bildet jede Oberflächenstruktur 51 bzw. 51' ein Puffervolumen mit der Tiefe tr aus.

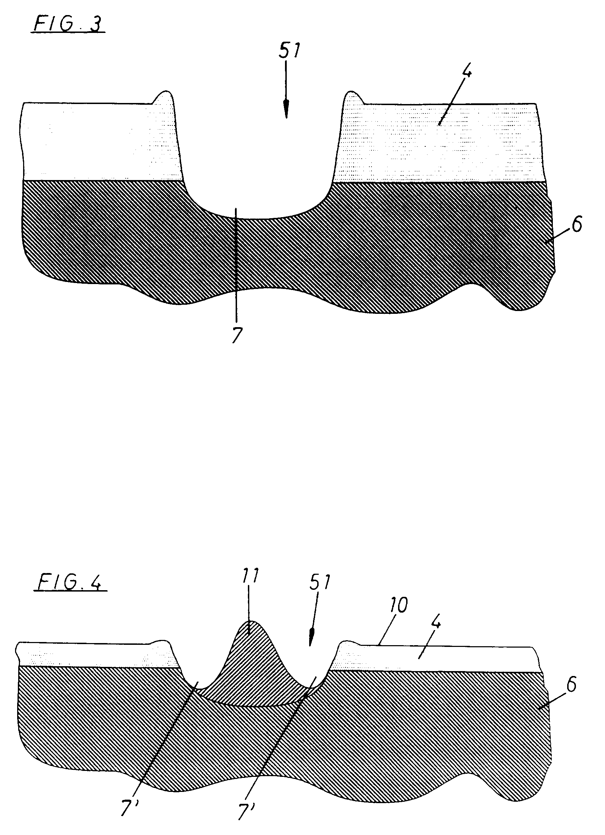

Die in den Fig.3,4 im Querschnitt dargestellten Oberflächenstrukturen 51 sind linien- oder strichartig ausgebildet, wie schematisch in Fig.2 dargestellt wurde. Es liegen mehrere Oberflächenstrukturen 51 einander parallel auf einer Bahn 9 angeordnet. Längs dieser Bahn 9 sollen die Werkstücke 2,3 miteinander verschweißt werden. Die Oberflächenstrukturen 51 sind abbildungsgemäß im Winkel α schräg zur Schweißbahn 9 angestellt, der sich bei der in dieser Fig.2 dargestellten Bahn geringfügig ändert, weil die Ausrichtung aller Oberflächenstrukturen 51 relativ zueinander beibehalten wird, die Bahn jedoch kurvig ist.

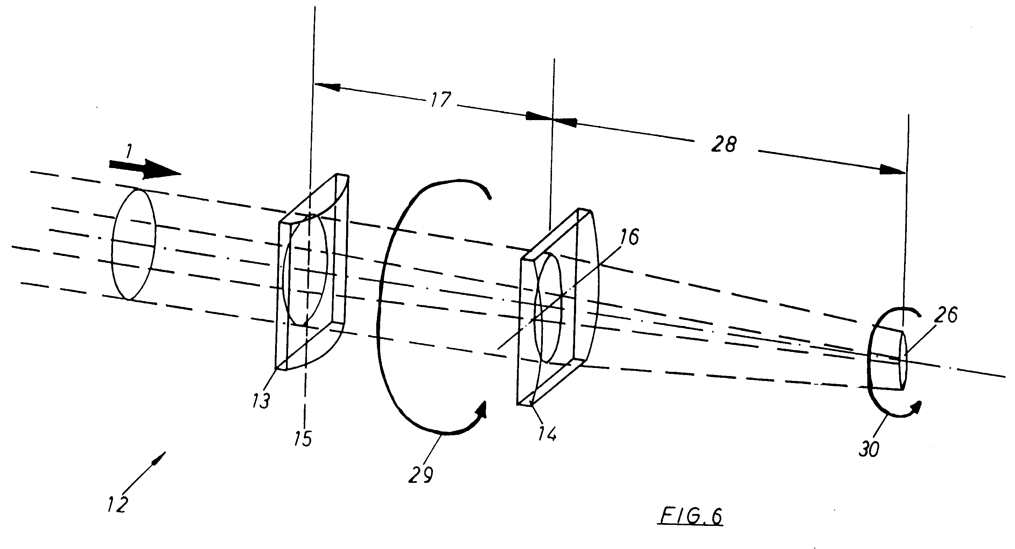

Die in den Fig.3,4 dargestellten Oberflächenstrukturen 51 zeigen zum Schweißen der Werkstücke 2,3 vorbereitete Fügebereiche, in denen der Beschichtungswerkstoff 4 nicht mehr vorhanden ist und die Oberflächenstruktur 51 sich bis in den Grundwerkstoff 6 des Werkstücks 2,3 hinein erstreckt. Fig.3 zeigt eine Vertiefung 7, die durch Verdampfen sämtlichen Werkstoffs des gesamten Vertiefungsbereichs erreicht wurde. Ein solches Verdampfen von Werkstoff läßt sich mit der in Fig.5 dargestellten Scanneroptik 8 erreichen. Fig.4 zeigt eine Oberflächenstruktur 51, bei der eine Erhebung 11 vorhanden ist, die über die Werkstückaußenfläche 10 vorsteht. Eine solche Erhebung läßt sich nach einem Verdampfen des Beschichtungswerkstoffs 4 durch Aufschmelzen des Grundwerkstoffs 6 erreichen, z.B. mit einer in Fig.6 dargestellten Zylinderoptik 12. Im Fall des Querschnitts der Oberflächenstruktur 51 gemäß Fig.3 ist ein kanalartiger Querschnitt über die Abmessung br gemäß Fig.1 vorhanden. Über diese Länge erstreckt sich auch die Oberflächenstruktur 51 der Fig.4, wobei die Erhebung 11 für einen entsprechenden, in Fig.1 nicht dargestellten Abstand der Werkstücke 2,3 voneinander sorgt, durch den zwischen diesen Werkstücken 2,3 in verbindung mit den Vertiefungen 7' genügend Raum geschaffen wird, um beim Verschweißen der beiden Werkstücke 2,3 genügend Raum zum Puffen oder zum Entweichen verdampften Beschichtungswerkstoffs zur Verfügung zu haben.

Mit der in Fig.5 dargestellten Scanneroptik 8 und mit der in Fig.6 dargestellten Linsenoptik 12 wird Laserstrahlung 1 eingesetzt, um Oberflächenstrukturen 51 zu erzeugen, welche die in den Fig.3,4 im Querschnitt dargestellten Vertiefungen 7,7' bzw. Mikrokanäle aufweisen. Die Laserstrahlung 1 wird von einem Laser mit ausreichender Leistung bei beliebiger Wellenlänge erzeugt. Vorzugsweise wird aber infrarote Laserstrahlung verwendet, beispielsweise die Strahlung eines Nd:YAG-Lasers oder eines CO₂-Lasers. Wegen der guten Pulsbarkeit bei gleichzeitig hohen Pulsleistungen wird der Einsatz eines Nd:YAG-Lasers bevorzugt. Die Laserstrahlung 1 wird der jeweils in den Fig.5,6 dargestellten Bearbeitungsoptik zugeführt, bei Einsatz eines Nd:YAG-Lasers mit einem Lichtwellenleiter.

Die in Fig.5 dargestellte Scanneroptik 8 besteht im wesentlichen aus einem ersten Scannspiegel 18, einem zweiten Scannspiegel 19 und einer Planfeldoptik 21. Der erste Scannspiegel 18 ist von einem Stellmotor 22 angetrieben und kann von diesem um die Achse 23 drehverstellt werden. Der zweite Scannspiegel 19 ist von einem weiteren Stellmotor 24 angetrieben und kann um die Achse 25 drehverstellt werden. Vom zweiten Scannspiegel 19 aus gelangt die Laserstrahlung 1 durch die Planfeldoptik 21 auf das Werkstück 3, mit der sie fokussiert wird. Die Bewegungen des ersten Scannspiegels 18 und des zweiten Scannspiegels 19 sind so aufeinander abgestimmt, daß auf dem Werkstück 3 von der fokussierten Laserstrahlung 1 bzw. von der gedachten Achse der Laserstrahlung die Bahn 9 bestrichen wird. Dazu kann die Scanneroptik 8 und/oder das Werkstück 3 bewegt werden. Im Verlauf der vorbestimmten Bahn 9 können die rändelungsartig angeordneten Oberflächenstrukturen 51 dadurch erzeugt werden, daß die Laserstrahlung 1 nur dann angewendet wird, wenn sich ihr Strahlfleck 26 auf der Werkstückaußenfläche 10 im Bereich der Breite br quer zur Bahn 9 bewegt. Es ergibt sich dann die in der Relativbewegungsrichtung der Scanneroptik 8 bzw. des Werkstücks 3 gewünschte Rändelung, in der die Laserstrahlung 1 Beschichtung 4 und Grundwerkstoff 6 derart verdampft, daß gemäß Fig.4 ausgebildete Vertiefungen 7 hergestellt werden, so daß sich ein Mikrokanal mit steilen Flanken bildet. Voraussetzung hierfür ist für jede Oberflächenstruktur eine hohe Anzahl von Laserpulsen, die mit hoher Wiederholfrequenz angewendet werden müssen, damit sich eine ausreichende Bearbeitungsgeschwindigkeit ergibt.

Bei der in Fig.6 dargestellten Zylinderoptik sind zwei Zylinderlinsen 13,14 vorhanden, die voneinander einen Abstand 17 haben. Der Abstand der werkstückseitigen Linse 14 vom nicht dargestellten Werkstück ist mit 28 bezeichnet. Die beiden Hauptachsen 15,16 der einander parallelen Linsen 13,14 sind um 90° zueinander gedreht. Die Abstände 17,28 sind einstellbar. Durch eine geeignete Auswahl der Brennweite beider Linsen 13,14 kann über die Variation der Abstände 17,28 eine Strahlformung vorgenommen werden, bei der ein Laserstrahl mit kreisförmigem Querschnitt am Eintritt der Linse 13 zu einem Linienfokus mit veränderlicher Breite und Länge eingestellt wird. Die Linse 13 bewirkt die in Fig.2 dargestellte Linien- oder Linsenform mit dem Abstand 17 entsprechender Breite und Länge der Linien. Die Linse 14 fokussiert die Laserstrahlung, die mit einem Strahlfleck 26 auf das Werkstück 2,3 auftrifft. Vom Ausmaß der Fokussierung und dem Abstand 28 sind die Breite und die Länge des Strahlflecks 26 bzw. der Oberflächenstruktur 51 abhängig.

Gemäß Fig.6 ist die Linse 14 dreheinstellbar, wie der Pfeil 29 ausweist. Dementsprechend ist auch der Strahlfleck 26 drehbar, was durch den Pfeil 30 gekennzeichnet wird. Infolgedessen kann der in Fig.2 dargestellte Anstellwinkel α zur Bahn 9 geändert werden. Das wäre beispielsweise dann erforderlich, wenn die Bahn 9 Kreisform hätte. Durch Dreheinstellung der Linse 14 könnte dafür gesorgt werden, daß der Anstellwinkel α der Oberflächenstrukturen 51 stets konstant bleibt. Auch bei dreidimensionalen Bahnkonturen ist diese Drehverstellbarkeit des Strahlflecks 26 von Bedeutung. Das gilt insbesondere deswegen, weil die Zylinderoptik 12 der Fig.6 so eingesetzt werden kann, daß jeder Laserpuls nur eine einzige Oberflächenstruktur 51 herstellt. Die Anzahl der Oberflächenstrukturen 51 entspricht also der Anzahl der Laserpulse. Daher können sehr hohe Bearbeitungsgeschwindigkeiten bei der Vorbereitung der Fügebereiche 20 erreicht werden. Es können insbesondere auch geringe Abstände der Oberflächenstrukturen voneinander erreicht werden, so daß die Fernwirkung des Beschichtungswerkstoffes in einem später eventuell im Schweißbereich vorhandenen elektrolytischen Medium erhalten bleibt.

Die Breite der Oberflächenstrukturen 51 liegt vorzugsweise in der Größenordnung von 0,5 bis 0,7 mm. Die Länge der Oberflächenstrukturen wird unter Berücksichtigung der Bahngenauigkeit des für die anschließende Laserschweißung verwendeten Strahl- oder Werkstückführungssystems gewählt, wobei der Mindestwert vorzugsweise bei 4 mm liegt. Wenn die Breite b der Schweißnaht etwa 1 bis 2 mm beträgt, kann der Abstand der Oberflächenstrukturen 51 in der gleichen Größenordnung sein.

Mit den beiden Optiken 8,12 der Fig.5,6 können insbesondere auch dreidimensionale vorbestimmte Bahnen 9 bearbeitet werden, wenn die Bahn also auf einem räumlich ausgebildeten Werkstück angeordnet ist und hierbei insbesondere ansteigt oder abfällt. Damit dann die vorgenannten Abmessungen der Oberflächenstrukturen 51 und ihre Relativanordnung bei im übrigen ungeändertem Impulsbetrieb zumindest etwa gleich groß bleiben, wird die Anstellung der Laserstrahlung in Bezug auf die Werkstückaußenfläche 10 geändert. Die Laserstrahlung wird im wesentlichen vertikal in Bezug auf die zu bearbeitende Werkstückaußenfläche 10 eingesetzt. Das gelingt durch entsprechend bewegliche Anordnung der Bearbeitungsoptik, die die in Fig.5 oder Fig.6 dargestellten Bauteile enthält, z.B. an einer Roboterhand, mit der die erforderliche vertikale Ausrichtung zur Werkstückaußenfläche 10 in herkömmlicher Weise ausgeführt werden kann, und die auch zur verdrehung der Linse 14 herangezogen werden kann.

## Patentansprüche

1. Verfahren zum Vorbereiten der Fügebereiche (20) beschichteter Werkstücke (2,3), insbesondere verzinkter Bleche, zum Schweißen mit Laserstrahlung (5), bei dem im Bereich der Schweißnaht (50) rändelungsartig angeordnete, Abstand (a) zwischen benachbarten Werkstückflächen (44,45) schaffende Oberflächenstrukturen (51,51') hergestellt werden, **dadurch gekennzeichnet**, daß die rändelungsartig angeordneten Oberflächenstrukturen (51,51') mit getakteter Hochenergiestrahlung (1) hergestellt werden.

2. Verfahren nach Anspruch 1, **dadurch gekennzeichnet**, daß jede der rändelungsartig angeordneten Oberflächenstrukturen (51,51') mit einem einzigen Strahlfleck (26) oder mit mehreren Strahlflecken (26) der getakteten Laserstrahlung (1) hergestellt wird.

3. Verfahren nach Anspruch 1 oder 2, **dadurch gekennzeichnet**, daß die rändelungsartig angeordneten Oberflächenstrukturen (51,51') als vom Beschichtungswerkstoff (4) freie Ausformungen des Grundwerkstoffs (6) des Werkstücks (2,3) hergestellt werden.

4. Verfahren nach einem oder mehreren der Ansprüche 1 bis 3, **dadurch gekennzeichnet**, daß die rändelungsartig angeordneten Oberflächenstrukturen (51,51') als durch Verdampfen von Grundwerkstoff (6) des Werkstücks (2,3) ausgebildete Vertiefungen (7) hergestellt werden.

5. Verfahren nach einem oder mehreren der Ansprüche 1 bis 4, **dadurch gekennzeichnet**, daß eine Scanneroptik (8) eingesetzt wird, die auf dem Werkstück (2,3) eine vorbestimmte Bahn (9) abfährt, auf der abschnittsweise jeweils eine in sich zusammenhängende Oberflächenstruktur (51) mit einer Vielzahl von Laserpulsen erzeugt wird.

6. Verfahren nach einem oder mehreren der Ansprüche 1 bis 3, **dadurch gekennzeichnet**, daß die rändelungsartig angeordneten Oberflächenstrukturen (51,51') als durch Aufschmelzen von Grundwerkstoff (6) des Werkstücks (2,3) ausgebildete, über die Werkstückaußenfläche (10) vorstehende Erhebungen (11) hergestellt werden.

7. Verfahren nach Anspruch 6, **dadurch gekennzeichnet**, daß eine Zylinderoptik (12) eingesetzt wird, die die Laserstrahlung (1) strichartig fokussiert, wobei pro Lasertakt eine Oberflächenstruktur (51) erzeugt wird.

8. Verfahren nach Anspruch 7, **dadurch gekennzeichnet**, daß als Zylinderoptik (12) zwei Zylinderlinsen (13,14) mit zueinander senkrechten Achsen (15,16) und mit einstellbarem Abstand (17,28) zueinander und/oder zum Werkstück (2,3) verwendet werden.

9. Verfahren nach einem oder mehreren der Ansprüche 5 bis 8, **dadurch gekennzeichnet**, daß die Scanner- (8) oder Zylinderoptik (12) zur Herstellung von rändelungsartig angeordneten Oberflächenstrukturen (51) mit einer motorisch betriebenen Rotationsachse und/oder mit zumindest im wesentlichen vertikaler Anstellung der Strahlachse der Laserstrahlung (1) in Bezug auf die zu bearbeitende Werkstückaußenfläche (10) eingesetzt wird.

10. Verfahren nach einem oder mehreren der Ansprüche 1 bis 9, **dadurch gekennzeichnet**, daß ein Nd:YAG-Laser mit Lichtwellenleiter zur Übertragung der Laserstrahlung (1) vom Laser zu einer Scanner- (8) oder Zylinderoptik (12) verwendet wird.

11. Überlappstoß zum Schweißen beschichteter Werkstücke (2,3), insbesondere verzinkter Bleche, mittels Laserstrahlung (5), mit im Bereich der Schweißnaht rändelungsartig angeordneter, Abstand (a) zwischen benachbarten Werkstückflächen (44,45) schaffenden Oberflächenstrukturen (51,51'), **dadurch gekennzeichnet**, daß die rändelungsartig angeordneten Oberflächenstrukturen (51,51') vom Beschichtungswerkstoff (4) durch Bestrahlung mit Hochenergiestrahlung (1) freie Ausformungen des Grundwerkstoffs des Werkstücks (2,3) sind.

12. Überlappstoß nach Anspruch 11, **dadurch gekennzeichnet**, daß die rändelungsartig angeordneten Oberflächenstrukturen (51,51') durch Verdampfen von Grundwerkstoff (6) des Werkstücks (2,3) ausgebildete Vertiefungen (7) oder durch Aufschmelzen von Grundwerkstoff (6) des Werkstücks (2,3) ausgebildete, über die Werkstückaußenfläche (10) vorstehende Erhebungen (11) sind.

## Claims

1. Process for the preparation of the seam regions (20) of coated workpieces (2, 3), especially galvanised sheet metal, for welding by laser beam (5), in which knurled-type surface structures (51, 51') are produced in the region of the weld seam (50) creating space (a) between adjacent workpiece surfaces (44, 45), **characterised in that** the knurled-type surface structures (51, 51') are produced by pulsed high-energy beams (1).

2. Process according to claim 1, **characterised in that** each of the knurled-type surface structures (51, 51') is produced by a single beam spot (26) or by a plurality of beam spots (26) of the pulsed laser beam (1).

3. Process according to claim 1 or 2, **characterised in that** the knurled-type surface structures (51, 51') are produced as deformations of the base material (6) of the workpiece (2, 3) free from coating material (4).

4. Process according to one or more of claims 1 to 3, **characterised in that** the knurled-type surface structures (51, 51') are produced as depressions (7) made by vapourisation of base material (6) of the workpiece (2, 3).

5. Process according to one or more of claims 1 to 4, **characterised in that** a scanner optical means (8) is utilised which follows a predetermined path (9) on the workpiece (2, 3), on sections of which path a consequential surface structure (51) is produced by a multiplicity of laser pulses.

6. Process according to one or more of claims 1 to 3, **characterised in that** the knurled-type surface structures (51, 51') are produced as protuberances (11) projecting above the workpiece outer surface (10) and formed by melting of base material (6) of the workpiece (2,3).

7. Process according to claim 6, **characterised in that** a cylindrical optical device (12) is utilised which focuses the laser beam (1) as a streak, wherein one surface structure (51) is produced per laser pulse.

8. Process according to claim 7, **characterised in that**, as the cylindrical optical device (12), two cylindrical lenses (13, 14) with axes (15, 16) perpendicular to one another and with an adjustable distance (17, 28) between one another and/or to the workpiece (2, 3) are used.

9. Process according to one or more of claims 5 to 8, **characterised in that** the scanner optical means (8) or cylindrical optical device (12) for the production of knurled-type surface structures (51) is used with a motor-driven axis of rotation and/or with at least substantially vertical setting of the beam axis of the laser beam (1) in relation to the workpiece outer surface (10) to be prepared.

10. Process according to one or more of claims 1 to 9, **characterised in that** an Nd:YAG laser with optical waveguide is used for the transmission of the laser beam (1) from the laser to a scanner optical means (8) or cylindrical optical device (12).

11. Lap joint for the welding of coated workpieces (2, 3), especially galvanised metal sheet, by means of laser beam (5), with knurled-type surface structures (51, 51') arranged in the region of the weld seam and creating space (a) between adjacent workpiece surfaces (44, 45), **characterised in that** the knurled-type surface structures (51, 51') are deformations of the base material of the workpiece (2, 3) free from coating material (4) and produced by irradiation with high-energy radiation (1).

12. Lap joint according to claim 11, **characterised in that** the knurled-type surface structures (51, 51') are depressions (7) formed by evaporation of base material (6) of the workpiece (2, 3) or are protuberances (11) projecting above the workpiece outer surface (10) and formed by melting of base material (6) of the workpiece (2, 3).

## Revendications

1. Procédé pour préparer les zones de joint (20) de pièces revêtues (2, 3), en particulier de tôles zinguées, pour le soudage à l'aide d'un rayonnement laser (5), selon lequel on fabrique dans la zone du cordon de soudure (50) des structures superficielles (51, 51') qui sont disposées à la manière d'un moletage et qui créent un espacement (a) entre des surfaces de pièce voisines (44, 45), **caractérisé** en ce que les structures superficielles (51, 51') disposées à la manière d'un moletage sont réalisées à l'aide d'un rayonnement à haute énergie synchronisé (1).

2. Procédé selon la revendication 1, **caractérisé** en ce que chaque structure superficielle (51, 51') disposée à la manière d'un moletage est réalisée à l'aide d'une seule tache (26) ou de plusieurs taches (26) du rayonnement laser synchronisé (1).

3. Procédé selon la revendication 1 ou 2, **caractérisé** en ce que les structures superficielles (51, 51') disposées à la manière d'un moletage sont réalisées sous la forme de déformations du matériau de base (6) de la pièce (2, 3) dépourvues du matériau de revêtement (4).

4. Procédé selon l'une au moins des revendications 1 à 3, **caractérisé** en ce que les structures superficielles (51, 51') disposées à la manière d'un moletage sont réalisées sous la forme de creux (7) formés par évaporation de matériau de base (6) de la pièce (2, 3).

5. Procédé selon l'une au moins des revendications 1 à 4, **caractérisé** en ce qu'on met en oeuvre un système optique à scanner (8) qui décrit sur la pièce (2, 3) une trajectoire prédéfinie (9) sur laquelle une structure superficielle continue (51) est générée à chaque fois par sections à l'aide d'une multiplicité d'impulsions lasers.

6. Procédé selon l'une au moins des revendications 1 à 3, **caractérisé** en ce que les structures superficielles (51, 51') disposées à la manière d'un moletage sont réalisées sous la forme de bosses (11) qui sont formées par fusion de matériau de base (6) de la pièce (2, 3) et qui font saillie sur la surface extérieure (10) de la pièce.

7. Procédé selon la revendication 6, **caractérisé** en ce qu'on met en oeuvre un système optique cylindrique (12) qui focalise le rayonnement laser (1) par lignes, une structure superficielle (51) étant générée à chaque cycle laser.

8. Procédé selon la revendication 7, **caractérisé** en ce qu'on utilise comme système optique cylindrique (12) deux lentilles cylindriques (13, 14) dont les axes (15, 16) sont perpendiculaires et dont l'écartement (17, 28) l'une par rapport à l'autre et/ou par rapport à la pièce (2, 3) est réglable.

9. Procédé selon l'une au moins des revendications 5 à 8, **caractérisé** en ce que le système optique à scanner (8) ou cylindrique (12) sert à fabriquer des structures superficielles (51) disposées à la manière d'un moletage avec un axe de rotation commandé par un moteur et/ou avec une incidence au moins globalement verticale de l'axe du rayonnement laser (1) par rapport à la surface extérieure de pièce (10) à traiter.

10. Procédé selon l'une au moins des revendications 1 à 9, **caractérisé** en ce qu'on utilise un laser Nd:YAG à guide d'ondes lumineuses pour transmettre le rayonnement laser (1) à un système optique à scanner (8) ou cylindrique (12), à partir du laser.

11. Assemblage à recouvrement pour le soudage de pièces revêtues (2, 3), en particulier de tôles zinguées, à l'aide d'un rayonnement laser (5), comportant des structures superficielles (51, 51') qui sont disposées à la manière d'un moletage dans la zone du cordon de soudure et qui créent un espacement (a) entre des surfaces de pièce voisines (44, 45), **caractérisé** en ce que les structures superficielles (51, 51') disposées à la manière d'un moletage sont définies par des déformations du matériau de base de la pièce (2, 3) qui sont dépourvues du matériau de revêtement (4) et qui sont réalisées à l'aide d'un rayonnement à haute énergie synchronisé (1).

12. Assemblage à recouvrement selon la revendication 11, **caractérisé** en ce que les structures superficielles (51, 51') disposées à la manière d'un moletage sont définies par des creux (7) formés par évaporation du matériau de base (6) de la pièce (2, 3), ou par des bosses (11) qui sont formées par fusion de matériau de base (6) de la pièce (2, 3) et qui font saillie sur la surface extérieure (10) de la pièce.
